# EUROPÄISCHE PATENTSCHRIFT

(11) **EP 2 099 669 B1**
(45) Veröffentlichungstag und Bekanntmachung des Hinweises auf die Patenterteilung: **31.03.2010**
(21) Anmeldenummer: 07857032.2
(22) Anmeldetag: 21.12.2007
(51) Int. Cl.: B62D 1/16, B62D 1/20, B62D 1/185

(54) **LÄNGENVERÄNDERBARE LENKSPINDEL**
VARIABLE-LENGTH STEERING SPINDLE
ARBRE DE DIRECTION DE LONGUEUR VARIABLE

(30) Priorität: 10.01.2007 DE 102007002380
(43) Veröffentlichungstag der Anmeldung: 16.09.2009
(73) Patentinhaber: ThyssenKrupp Presta Aktiengesellschaft, 9492 Eschen (LI)
(72) Erfinder: KLUKOWSKI, Christoph, CH-8880 Walenstadt (CH)
(74) Vertreter: Hofmann, Ralf U.
(86) Internationale Anmeldenummer: PCT/EP2007/011309
(87) Internationale Veröffentlichungsnummer: WO 2008/083829

(56) Entgegenhaltungen:
- GB-A- 1 207 410
- US-A- 6 149 526

## Beschreibung

Die Erfindung bezieht sich auf eine längenveränderbare Lenkspindel für Lenkvorrichtungen von Kraftfahrzeugen umfassend
- ein äußeres hülsenförmiges Profil mit von der Kreisform abweichendem Querschnitt,
- ein inneres Profil mit von der Kreisform abweichendem Querschnitt, welches mit einem Endabschnitt in das äußere Profil einschiebbar ist, wobei die innere Umfangskontur des äußeren Profils und die äußere Umfangskontur des inneren Profils wenigstens zum Teil von bogenförmigen Abschnitten gebildet werden und diese bogenförmigen Abschnitte zum zwischen dem äußeren Profil und dem inneren Profil liegenden Spaltraum hin, vorzugsweise abwechselnd, konvexe und konkave Abschnitte sowohl des äußeren Profils als auch des inneren Profils bilden und die konvexen Abschnitte des äußeren Profils den konkaven Abschnitten des inneren Profils und/oder die konkaven Abschnitte des äußeren Profils den konvexen Abschnitten des inneren Profils zumindest teilweise gegenüberliegen, und
- eine im Spaltraum angeordnete Gleithülse, die gegenüber einem der beiden Profile unverdrehbar und in Längsrichtung unverschiebbar gehalten ist und die zusammen mit dem die Gleithülse haltenden Profil gegenüber dem anderen Profil in Längsrichtung verschiebbar, aber im Wesentlichen unverdrehbar ist.

Eine derartige längenveränderbare Lenkspindel ist aus der US 6,149,526 A bekannt. Die im Spaltraum zwischen dem inneren und äußeren Profil angeordnete Gleithülse liegt entlang ihrer Umfangskontur an den den Spaltraum begrenzenden Wandungen der Profile nur abschnitts- und wechselweise an, wobei sie abwechselnd an konvexen Abschnitten des inneren Profils und an konkaven Abschnitten des äußeren Profils anliegt. Es wird hierbei das zwischen den Teilen notwendigerweise vorhandene Spiel kompensiert, wobei bei einer Drehbewegung des Lenkrads ein Lenkwiderstand praktisch spielfrei einsetzt. Das notwendigerweise vorhandene Spiel wird von dem die Lenkung betätigenden Fahrzeuglenker nicht mehr als solches wahrgenommen, da die Gleithülse gegenüber dem äußeren Profil vorgespannt ist. Trotzdem können die für die achsiale Verschiebbarkeit der Profile vorgegebenen Werte verlässlich und auf Dauer eingehalten werden. Ein Nachteil bei dieser Konstruktion besteht darin, dass bei einer zunehmenden Verringerung des tolerierten tatsächlichen Spiels zwischen dem inneren und dem äußeren Profil, was in der Praxis erwünscht ist, es zwischen der Gleithülse und des gegenüber dieser verschiebbaren Profils zu sogenanntem "Slip-Stick" kommen kann. Das Gleiten bei einer Längsverschiebung ist somit nicht mehr kontinuierlich, sondern es kommt zu einer ratternden Bewegung, die am Lenkrad spürbar ist und auch zu unerwünschten Geräuschen führen kann. Ein solcher Slip-Stick kann nicht nur bei einer Längenverstellung der Lenksäule sondern auch bei Fahrzeugverwindungen bei Kurvenfahrten auftreten.

Neben Gleitführungen zwischen Lenkspindelteilen sind auch Schiebeführungen mit zwischen den Wellenteilen wirkenden Wälzkörpern bekannt, beispielsweise aus der DE 37 30 393 C2, DE 101 23 413 A1, DE 198 24 477 A1, EP 1 652 748 und EP 1 0b5 397. Über diese Wälzkörper müssen auch die zwischen den Lenkspindelteilen wirkenden Drehmomente übertragen werden. Um auch hohe Lenkkräfte aufnehmen zu können, sind diese Konstruktionen aufwändig hinsichtlich der Ausbildung der Laufbahnen für die Wälzkörper und auch müssen entsprechende Anzahlen und Größen von Wälzkörpern eingesetzt werden, die fast spielfrei arbeiten müssen. Teilweise sind auch die Wälzkörper gegenüber dem einen Profil elastisch lagernde Elemente vorhanden, die die Wälzkörper gegen das andere Profil vorspannen.

Aus der EP 1 070 865 A2 ist ein nicht gattungsgemäßes Linearwälzlager zum Übertragen von Drehmomenten bekannt, welches mit Kugelumläufen ausgebildet ist. Die Kugelumläufe sind in einem zwischen dem äußeren und dem inneren Profil angeordneten Käfig ausgebildet. Zum spielfreien Verspannen der Profile gegeneinander ist ein auf die Kugeln wirkendes Vorspannmittel vorgesehen, welches insbesondere von einem sich in der Lastzone befindenden federelastisch ausgebildeten Laufbahnabschnitt an einem der gegenüberliegenden Wandabschnitte der Profile gebildet ist. Bei Einleiten eines zwischen den Profilen wirkenden Drehmoments kann der Wandabschnitt so weit einfedern, dass sich die die gegenüberliegenden Wandabschnitte der Profile so weit gegeneinander bewegen, bis sie einander berühren oder einen Abschnitt des zwischen ihnen angeordneten Käfigs einspannen. Nachteilig an dieser Einrichtung ist u.a. die durch die Kugelumläufe bedingte aufwändige Ausbildung. Auch ist bei dieser Konstruktion nicht ohne Weiteres ein insgesamt sehr kleines Spiel zwischen dem inneren und dem äußeren Profil erreichbar, bis die einander zugeordneten Wandabschnitte der Profile einander berühren oder einen Abschnitt des Käfigs zwischen sich einspannen bzw. ist bei einem solchen Lastfall die verschiebbare Führung zwischen dem inneren und dem äußeren Profil eingeschränkt.

Aufgabe der Erfindung ist es, eine längenveränderbare Lenkspindel der eingangs genannten Art bereitzustellen, bei der bei einem sehr kleinen insgesamten Spiel der Verdrehbarkeit zwischen dem inneren und dem äußeren Profil eine leichtgängige Längenverstellbarkeit erreicht wird. Erfindungsgemäß gelingt dies durch eine längenveränderbare Lenkspindel mit den Merkmalen des Anspruchs 1. Aus den abhängigen Ansprüchen gehen vorteilhafte Weiterbildungen hervor.

Erfindungsgemäß werden somit bei einer längenveränderbaren Lenkspindel der eingangs genannten Art Wälzkörper in Ausnehmungen der Gleithülse angeordnet. In ihrem unbelasteten Zustand ragen diese jedenfalls auf derjenigen Seite der Gleithülse aus dieser heraus, auf der sich das gegenüber der Gleithülse längsverschiebbare Profil befindet. Im montierten Zustand der Lenkspindel liegen diese Wälzkörper jeweils an einer Oberfläche dieses längsverschiebbaren Profils an, die eine Lauffläche für den jeweiligen Wälzkörper bildet und gegenüber der der jeweilige Wälzkörper vorgespannt ist. Die Wälzkörper sind jeweils gegen eine Rückstellkraft in eine von der jeweiligen Lauffläche weggerichtete Richtung eindrückbar, wobei es bei einem Überschreiten eines Grenzwerts des zwischen den Profilen wirkenden Drehmoments zu einer Anlage zwischen der Oberfläche der Gleithülse und dem ihr gegenüber verschiebbaren Profil kommt. Hohe einwirkende Drehmomente werden somit direkt zwischen dem längsverschiebbaren Profil und der Gleithülse übertragen, so dass die Belastung der Laufbahnen und der Wälzkörper begrenzt wird. Ohne einwirkende Drehmomente oder bei niedrigen Drehmomenten wirken die Wälzkörper einem Slip-Stick entgegen, da sie (wieder) aus der Gleithülse vortretend ein minimales Spiel zwischen den Gleitteilen erzwingen. Bei hohen einwirkenden Drehmomenten wird eine zuverlässige und dennoch relativ reibungsarme Kraftübertragung zwischen dem verschiebbaren Profil und der Gleithülse erreicht, wobei in der Praxis bei solchen hohen, beispielsweise beim Einparken auftretenden Drehmomenten Probleme mit Slip-Stick im Allgemeinen weniger auftreten. Eine erfindungsgemäße längenveränderbare Lenkspindel kann mit einem sehr geringen insgesamten Spiel der Verdrehung zwischen dem inneren und dem äußeren Profil ausgebildet werden, welches vom Lenker zudem nicht als solches wahrnehmbar ist. Das die Gleithülse in Längsrichtung unverschiebbar haltende Profil ist somit gegenüber dem anderen Profil in Längsrichtung verschiebbar, aber im Wesentlichen (nur mit einem minimalen Spiel für die Längsverschiebbarkeit) unverdrehbar.

In einer vorteilhaften Ausführungsvariante der Erfindung sind die Wälzkörper in Längsrichtung der Gleithülse unverschiebbar in den Ausnehmungen drehbar angeordnet. Auch eine zwischen Anschlägen, die von den Längsenden der Ausnehmungen gebildet werden, begrenzte Längsverschiebbarkeit der Wälzkörper in den Ausnehmungen ist denkbar und möglich.

Vorzugsweise werden die Wälzkörper von Kugeln gebildet. Die Ausnehmungen in der Gleithülse können hierbei von Sacklochbohrungen mit kreisförmigem Querschnitt oder von langlochförmigen Vertiefungen gebildet werden, wobei die Kugeln am Boden der jeweiligen Ausnehmung anliegen. Beim Eindrücken eines Wälzkörpers gegen den Boden wird vom Material der Gleithülse eine Rückstellkraft hervorgerufen, von der auch die Vorspannung gegen das längsverschiebbare Profil bewirkt wird. Vorzugsweise besteht die Gleithülse aus einem Kunststoffmaterial. Weiters kann die die jeweilige Kugel aufnehmende Ausnehmung auch durch das Kunststoffmaterial der Gleithülse durchgehen. Es können in diesem Fall am bzw. im Kunststoffmaterial der Gleithülse federelastische Elemente befestigt sein, die den Boden der jeweiligen Ausnehmung bilden. Weiters können federelastische Elemente, gegen die die Kugeln in die Ausnehmungen eindrückbar sind, auch zwischen der Gleithülse und dem die Gleithülse in Längsrichtung unverschiebbar haltenden Profil eingelegt sein oder an bzw. in diesem Profil befestigt sein. Diese federelastischen Elemente können zumindest auf ihrer Anlageseite für den jeweiligen Wälzkörper mit einer Gleitschicht oder einem Gleitmaterial versehen sein. Grundsätzlich können bei allen diesen Ausführungsvarianten statt Kugeln auch anders ausgebildete Wälzkörper verwendet werden, beispielsweise walzenförmige.

Vorzugsweise ist die Gleithülse einteilig ausgebildet und entlang ihres Umfangs geschlossen und umschließt so das innere Profil.

In einer vorteilhaften Ausführungsform der Erfindung liegt die Gleithülse in vom Spaltraum aus gesehen konvexen Abschnitten der Umfangskontur des sie tragenden Profils an diesem an und ist in dazwischenliegenden konkaven Abschnitten der Umfangskontur des sie tragenden Profils von diesem beabstandet. In den diesen konkaven Abschnitten gegenüberliegenden vom Spaltraum aus gesehen konvexen Abschnitten der Umfangskontur des gegenüber der Gleithülse längsverschieblichen Profils befinden sich die Laufbahnen für die Wälzkörper. Im Bereich der den konvexen Abschnitten des die Gleithülse tragenden Profils gegenüberliegenden vom Spaltraum ausgesehen konkaven Abschnitten des gegenüber der Gleithülse längsverschieblichen Profils ist die Gleithülse von diesem beabstandet.

In einer vorteilhaften Ausführungsform der Erfindung ist vorgesehen, dass alle Wälzkörper von demjenigen Profil, an dem die Gleithülse in Längsrichtung unverschiebbar gehalten ist, beabstandet sind, und zwar ohne einwirkendes Drehmoment als auch bei einem einwirkenden Drehmoment, und zwar sowohl bei einem Wert dieses Drehmoments, der unterhalb des Grenzwerts liegt, bei welchem die Kraftübertragung direkt zwischen dem längsverschiebbaren Profil und der Gleithülse erfolgt, als auch bei einem oberhalb dieses Grenzwerts liegenden Drehmoment. Der Abstand kann hierbei zumindest teilweise von einem Luftspalt gebildet werden oder er wird insgesamt von einem Teil überbrückt, welches auch oberhalb des genannten Grenzwerts eine Nachgiebigkeit für den jeweiligen Wälzkörper aufweist, beispielsweise von einem federelastischen Element oder dem Material der Gleithülse.

Weitere Vorteile und Einzelheiten der Erfindung werden im Folgenden anhand der beiliegenden Zeichnung erläutert. In der Zeichnung zeigen:
- Fig. 1: eine Ansicht einer Lenkspindel gemäß der Erfindung im Abschnitt der teleskopierbaren Profile;
- Fig. 2: die Lenkspindel nach Fig. 1, teilweise im Längsschnitt;
- Fig. 3: einen Querschnitt entlang der Linie A-A von Fig. 2;
- Fig. 4: die Gleithülse in Ansicht (ohne eingesetzte Wälzkörper);
- Fig. 5: einen vergrößerten Ausschnitt B von Fig. 3;
- Fig. 6: eine modifizierte Ausführungsform einer Lenkspindel gemäß der Erfindung, in einer Darstellung analog Fig. 5;
- Fig. 7: eine weitere modifizierte Ausführungsform;
- Fig. 8: einen Querschnitt analog Fig. 3 einer vierten Ausführungsvariante der Erfindung;
- Fig. 9: eine Ansicht der Gleithülse (ohne Wälzkörper) entsprechend dieser vierten Ausführungsform der Erfindung;
- Fig. 10: eine weitere Ausführungsvariante der Gleithülse in Ansicht (ohne Wälzkörper);
- Fig. 11: einen Teil eines Querschnitts durch eine Lenkspindel gemäß einer sechsten Ausführungsform der Erfindung;
- Fig. 12: einen Teil eines Querschnitts durch eine Lenkspindel gemäß einer siebten Ausführungsform;
- Fig. 13: einen Teil eines Querschnitts durch eine Lenkspindel gemäß einer achten Ausführungsform;
- Fig. 14: einen Teil eines Querschnitts durch eine Lenksäule gemäß einer neunten Ausführungsform.
Die Figuren weisen unterschiedliche Maßstäbe auf.

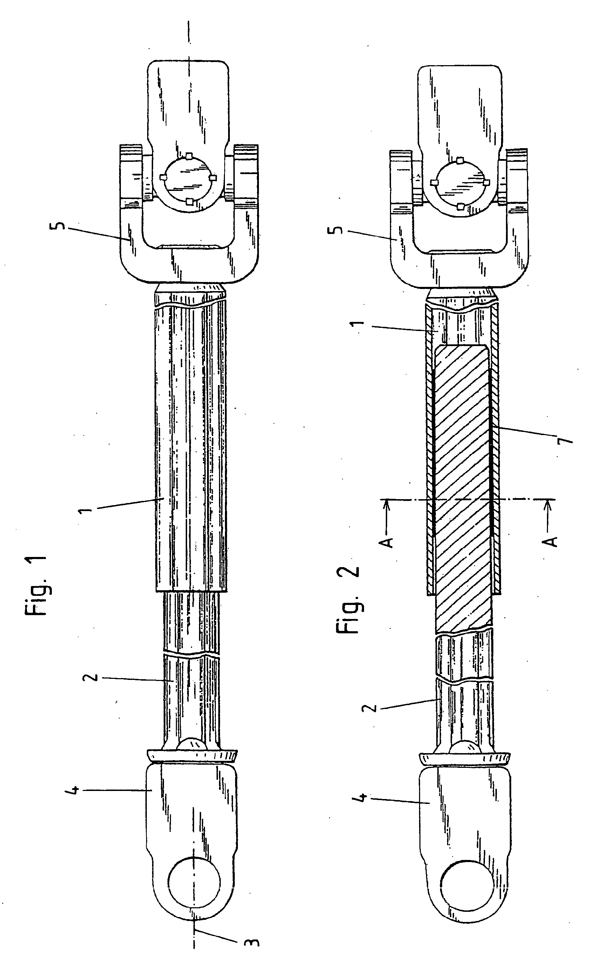

Eine erste Ausführungsform der Erfindung ist in den Fig. 1 bis 5 dargestellt. Die Lenkspindel umfasst im dargestellten, erfindungswesentlichen Abschnitt ihrer Längserstreckung ein äußeres hülsenförmiges Profil 1 und ein inneres Profil 2, welches mit einem Endabschnitt in das äußere Profil 1 ragt und gegenüber diesem in Richtung der zentralen Längsachse 3 der Lenkspindel, also in Längsrichtung der Lenkspindel verschiebbar ist.

Das innere Profil 2 kann wie dargestellt aus dem vollen Material bestehen. Eine hülsenförmige Ausbildung ist ebenfalls denkbar und möglich. Das äußere Profil 1 könnte abseits vom Hohlraum, in welchen das innere Profil 2 ragt, auch einen vollen Abschnitt aufweisen. In Fig. 1 und 2 sind an den voneinander abgelegenen Enden der Profile 1, 2 Formstücke 4, 5 angebracht, die mit anderen, für die Erfindung nicht wesentlichen Teilen der Lenkvorrichtung verbunden sind.

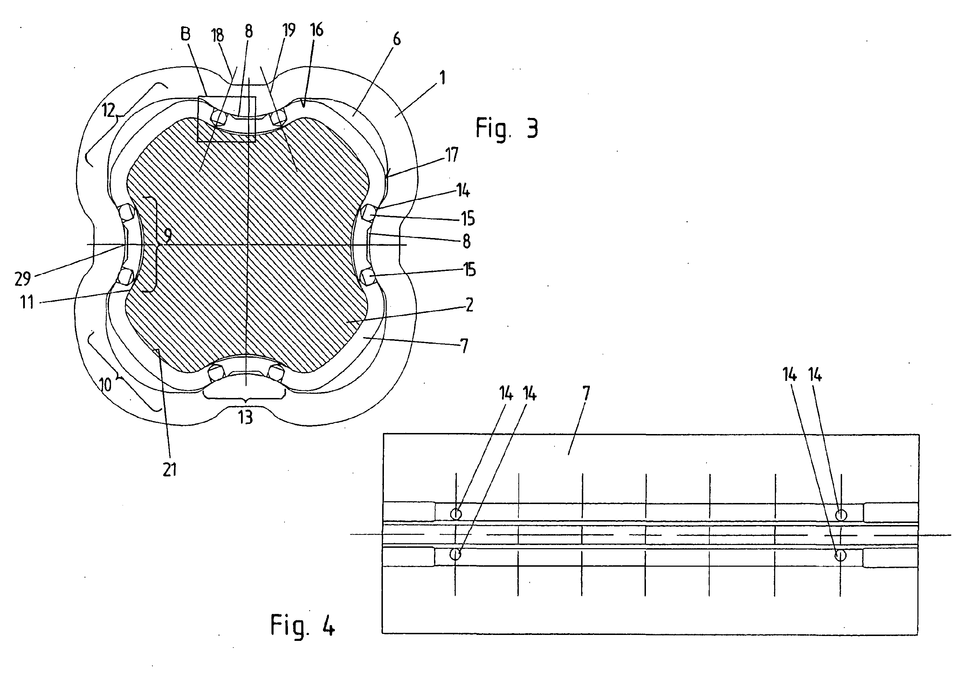

Die Profile 1, 2 besitzen von der Kreisform abweichende Querschnitte (vgl. Fig. 3). Hierbei werden die innere Umfangskontur des äußeren Profils 1 und die äußere Umfangskontur des inneren Profils 2 wenigstens zum Teil von bogenförmigen Abschnitten gebildet, wobei die Krümmungsradien dieser bogenförmigen Abschnitte entlang der jeweiligen Umfangskontur abwechselnd innerhalb und außerhalb des jeweiligen Profils liegen. Dabei sind die äußere Umfangskontur des inneren Profils 1 und die innere Umfangskontur des äußeren Profils 2 zumindest abschnittsweise und annähernd zueinander korrespondierend ausgebildet.

Vom zwischen den Profilen 1, 2 sich befindenden Spaltraum 6 aus gesehen werden von diesen bogenförmigen Abschnitten der Umfangskonturen der Profile 1, 2 jeweils abwechselnd konvexe und konkave Zonen bzw. Abschnitte 9, 10 bzw. 12, 13 der Profile 1, 2 gebildet. Die konvexen Abschnitte 13 des äußeren Profils 1 liegen hierbei den konkaven Abschnitten 9 des inneren Profils 2 und die konkaven Abschnitte 12 des äußeren Profils 1 liegen den konvexen Abschnitten 10 des inneren Profils 2 im Wesentlichen gegenüber.

Im gezeigten Ausführungsbeispiel werden die innere Umfangskontur des äußeren Profils und die äußere Umfangskontur des inneren Profils im Wesentlichen nur von bogenförmigen Abschnitten gebildet. Grundsätzlich denkbar und möglich wäre es auch, dass zwischen bogenförmigen Abschnitten der inneren Umfangskontur des äußeren Profils 1 und/oder zwischen bogenförmigen Abschnitten der äußeren Umfangskontur des inneren Profils 2 gerade Abschnitte vorhanden sind.

Die inneren Abmessungen des äußeren Profils 1 und die äußeren Abmessungen des inneren Profils 2 sind so weit voneinander unterschiedlich, dass zwischen diesen beiden Profilen 1, 2 ein nicht unerhebliches Spiel vorhanden ist. Es wird somit ein umlaufender Spaltraum 6 gebildet, der im gezeigten Ausführungsbeispiel entlang seines Umfangs eine wechselnde Breite aufweist. Grundsätzlich denkbar und möglich wäre es auch, dass der Spaltraum 6 entlang seines Umfangs eine konstante Breite besitzt.

Im Spaltraum 6 ist eine umfangsgeschlossene Gleithülse 7 angeordnet, von der das Spiel bzw. der Spalt zwischen dem äußeren Profil 1 und dem inneren Profil 2 teilweise überbrückt wird und die im gezeigten Ausführungsbeispiel am inneren Profil 2 in Längsrichtung des inneren Profils 2 unverschiebbar gehalten ist. Beispielsweise könnten hierzu beidseitig der Längsenden der Gleithülse 7 am inneren Profil 2 angeordnete Nasen vorhanden sein.

Die Gleithülse 7 entspricht hinsichtlich ihrer Umfangskontur zumindest im montierten Zustand über den Großteil ihres Umfangs der Umfangskontur des sie tragenden Profils 2. Wenn die Gleithülse 7 bestimmungsgemäß montiert ist, dann kann ihre Umfangskontur in geringem Maß von jener Kontur abweichen, die sie im nicht eingebauten Zustand aufweist. Durch den Einbau wird dann die Gleithülse 7 etwas verformt und dadurch vorgespannt. Die Gleithülse 7 ist im montierten Zustand gegenüber dem sie tragenden Profil 2 unverdrehbar.

Die Wandstärke der Gleithülse 7 ist im gezeigten Ausführungsbeispiel über ihren Umfang im Wesentlichen konstant. Lediglich im Bereich von längsverlaufenden Nuten 8 ist ihre Wandstärke im Ausführungsbeispiel etwas verringert. Denkbar und möglich wäre es auch, eine Gleithülse mit über ihren Umfang variierender Wandstärke bereitzustellen.

Die Gleithülse 7 besteht aus einem gleitfähigen Kunststoffmaterial, vorzugsweise einem makromolekularen Material. Es soll günstigerweise ein möglichst geringer Reibungskoeffizient zwischen der Gleithülse und dem gegenüber ihr längsverschieblichen Profil 1, aber auch gegenüber den weiter unten genauer erläuterten Wälzkörpern 15 erreicht werden.

Im gezeigten Ausführungsbeispiel liegt die Gleithülse 7 an zum Spaltraum 6 hin konvexen Abschnitten 10 der äußeren Umfangskontur des inneren Profils 2 an, vgl. Fig. 3. In dazwischenliegenden zum Spaltraum 6 hin konkaven Abschnitten 9 der äußeren Umfangskontur des inneren Profils 2 ist die Gleithülse 7 von diesem beabstandet. Zwischen den Abschnitten 9 und 10 liegt jeweils ein Übergangspunkt 11. In zum Spaltraum 6 hin konkaven Abschnitten 12 der inneren Umfangskontur des äußeren Profils 1 ist die Gleithülse 7 vom äußeren Profil 1 beabstandet. In dazwischenliegenden zum Spaltraum 6 hin konvexen Abschnitten 13 der inneren Umfangskontur des äußeren Profils 1 erfolgt die Längsführung zwischen der Gleithülse 7 und dem äußeren Profil 1.

Die Gleithülse 7 besitzt Ausnehmungen 14, die in diesem Ausführungsbeispiel in Form von Sacklöchern ausgebildet sind, die von der äußeren Oberfläche 17 der Gleithülse 7 ausgehen. In den Ausnehmungen 14 sind als Kugeln ausgebildete Wälzkörper 15 mit geringem Spiel drehbar angeordnet.

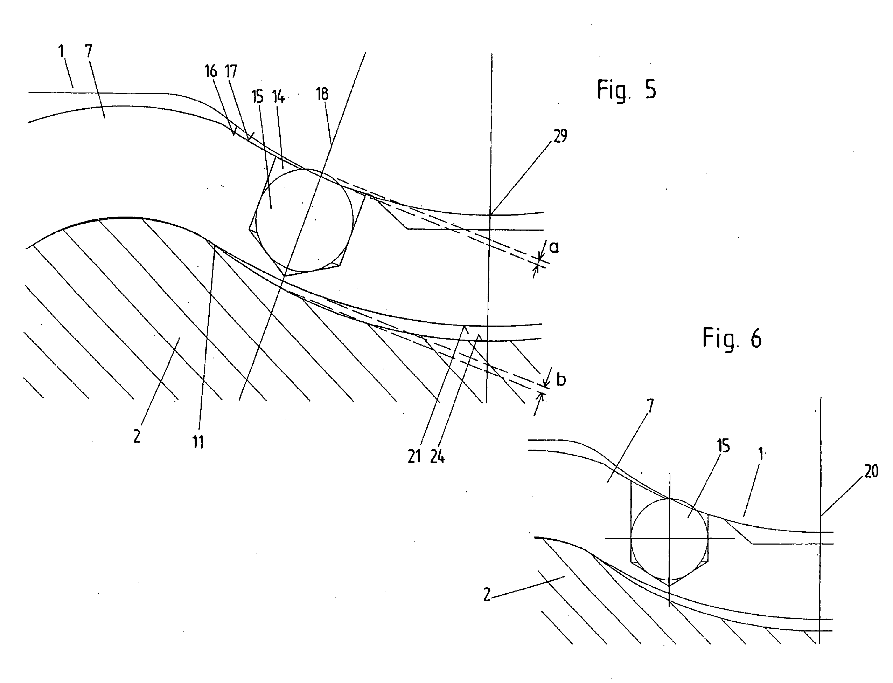

In Fig. 3 und 5 (und auch in den weiter unten beschriebenen Schnittdarstellungen betreffend andere Ausführungsformen der Erfindung) ist derjenige Zustand der Gleithülse 7 mit den in ihren Ausnehmungen 14 angeordneten Wälzkörpern 15 dargestellt, welcher ohne ein aufgeschobenes äußeres Profil 1 eingenommen würde. Die Wälzkörper 15 ragen um ein Maß a aus den Ausnehmungen 14 heraus und sind hierbei in den vom äußeren Profil 1 eingenommenen Raum hineinragend dargestellt. Im montierten Zustand der Lenkspindel werden die Wälzkörper 15 somit beim Aufschieben des äußeren Profils 1 in Richtung zum inneren Profil 2 verschoben, wobei die Gleithülse 7 abschnittsweise verformt wird. Hierdurch wird eine zentrierende Vorspannkraft der Wälzkörper 15 gegen die innere Oberfläche 16 des äußeren Profils 1 ausgebildet. Die Bereiche, an denen die Wälzkörper 15 an der inneren Oberfläche 16 des äußeren Profils 1 anliegen, stellen Laufbahnen für die Wälzkörper 15 dar, welche in Längsrichtung der Lenkspindel verlaufen.

Unter Zwischenschaltung der Gleithülse 7 mit den in ihr achslos drehbar gelagerten Wälzkörpern 15 sind die Profile 1, 2 im Wesentlichen, d. h. abgesehen von einem verbleibenden, für den Lenker aufgrund der auf die Wälzkörper 15 wirkenden Vorspannkraft nicht wahrnehmbaren Spiel, gegeneinander unverdrehbar.

Im Ausführungsbeispiel gemäß den Fig. 1 bis 5 ist der Abstand b der Gleithülse 7 vom inneren Profil 2 etwas größer als der Überstand a des Wälzkörpers 15.

Wenn zwischen den Profilen 1, 2 ein Drehmoment wirkt, so werden die Wälzkörper 15 in Abhängigkeit von der Größe dieses Drehmoments durch die vom gegenüber der Gleithülse 7 verschiebbaren Profil auf die Wälzkörper ausgeübte Kraft noch weiter in Richtung zum inneren Profil 2 verschoben, und zwar gegen die Rückstellkraft des Materials der Gleithülse 7. Bei steigendem Drehmoment kommt es ab einem Grenzwert des Drehmoments zu einer Anlage der inneren Oberfläche 16 des äußeren Profils 1 an die äußere Oberfläche 17 der Gleithülse 7. Ab diesem Grenzwert des Drehmoments erfolgt eine Längsverschiebung des äußeren Profils 1 gegenüber der Gleithülse 7 über eine Gleitreibung zwischen diesen beiden Teilen.

Im Ausführungsbeispiel gemäß den Fig. 1 bis 5 befinden sich jeweils beidseitig eines Scheitelpunkts 29 des konvexen Abschnitts 13 der inneren Umfangskontur des äußeren Profils 1 im gleichen Abstand von diesem zwei in Längsrichtung der Gleithülse 7 voneinander beabstandete Ausnehmungen 14 mit darin angeordneten Wälzkörpern 15. Es könnten auch mehr als zwei in Längsrichtung beabstandete Ausnehmungen 14 mit Wälzkörpern 15 oder nur eine einzelne Ausnehmung 14 mit einem oder mehreren Wälzkörpern 15 auf jeder Seite des Scheitelpunkts 29 vorhanden sein. Beidseitig eines jeweiligen Scheitelpunkts 29 könnten auch jeweils zwei oder mehr in Umfangsrichtung beabstandete Ausnehmungen 14 mit darin angeordneten Wälzkörpern 15 vorhanden sein.

Ohne ein einwirkendes Drehmoment zwischen den Profilen 1, 2 wird durch die Vorspannkraft der elastisch gebetteten Wälzkörper 15 von diesen eine Kraft auf das gegenüber der Gleithülse 7 längsverschiebliche Profil 1 ausgeübt, welche im Sinne einer Zentrierung dieses längsverschieblichen Profils 1 gegenüber dem anderen Profil 2 wirkt. Diese zentrierende Wirkung betrifft einerseits die Ausrichtung der Längsachsen der beiden Profile als auch die Winkelstellung der beiden Profile, d. h. es wird eine Kraft in Richtung einer Neutralstellung (= Mittelstellung) ausgeübt. Diese Kraft wirkt somit im Sinne der Ausbildung eines - abgesehen von den Anlagestellen der Wälzkörper 15 - umlaufenden Spalts zwischen der Gleithülse 7 und dem gegenüber ihr längsverschieblichen Profil 1.

Die Achsen 18, 19 der kreisrunden Ausnehmungen 14 liegen im Ausführungsbeispiel gemäß den Fig. 1 bis 5 rechtwinklig zur Wandung der Gleithülse 7 im Bereich der jeweiligen Ausnehmung 14 und schließen Winkel beispielsweise von 40° miteinander ein.

Fig. 6 zeigt eine Ausführungsvariante, bei der die Achsen 18, 19 der Ausnehmungen 14 annähernd parallel zur Normalen 20 auf die Gleithülse 7 liegen, welche die Gleithülse 7 im Bereich des Scheitelpunkts des konvexen Abschnitts 13 durchsetzt. Der Unterschied zum zuvor beschriebenen Ausführungsbeispiel besteht darin, dass bei der Herstellung der Gleithülse 7 deren Entformung einfacher möglich ist.

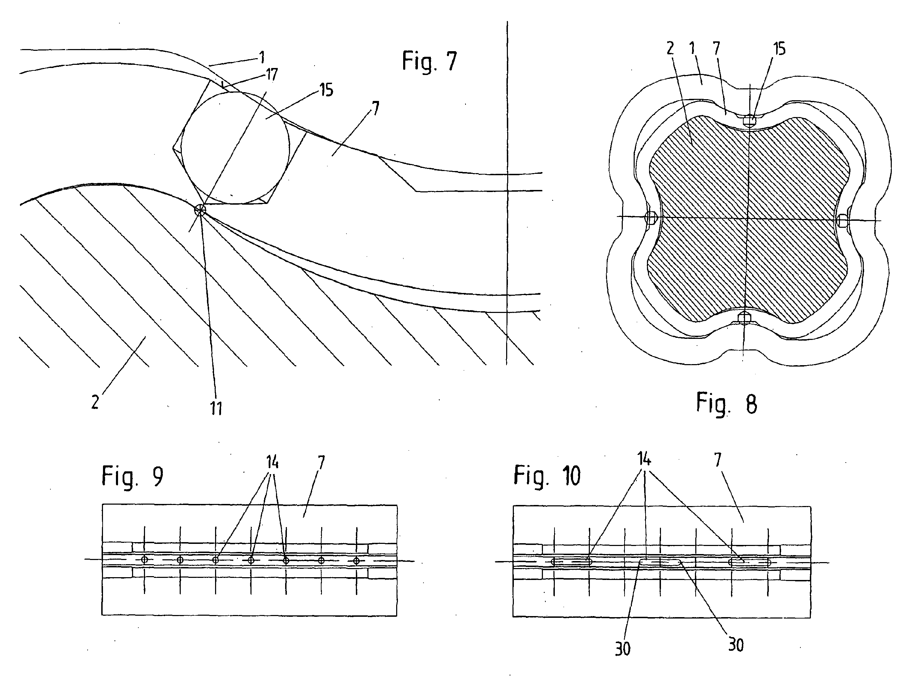

Fig. 7 zeigt eine weitere Ausführungsvariante, bei der die Achsen der Ausnehmungen 14 durch die Übergangspunkte 11 verlaufen. Der Unterschied zu den zuvor beschriebenen Ausführungsbeispielen besteht darin, dass es beim Eindrücken des jeweiligen Wälzkörpers 15 in Richtung zum inneren Profil 2 hier zu einem Fließen des Materials der Gleithülse 7 kommt, wobei das Kunststoffmaterial der Gleithülse 7 durch sein Bestreben, zumindest weitgehend in seine ursprüngliche Form zurückzukehren, auf den Wälzkörper 15 eine Rückstellkraft ausübt (= "elastisches Kriechen" oder "Memoryeffekt" des Materials der Gleithülse 7).

Bei der in den Fig. 8 und 9 dargestellten Ausführungsform sind die Wälzkörper jeweils im Bereich eines Scheitelpunkts 29 eines konvexen Abschnitts 13 der inneren Umfangskontur des äußeren Profils 1 angeordnet, d.h. die Laufbahnen der Wälzkörper 15 verlaufen entlang der die Scheitelpunkte aufweisenden Kämme. Beispielsweise sind in Längsrichtung der Gleithülse 7 pro Kamm jeweils mehr als zwei Wälzkörper 15 vorhanden, vgl. die aus Fig. 9 ersichtliche Reihe von Ausnehmungen 14. Durch die gegenüber dem zur Gleithülse 7 längsverschiebbaren Profil 1 vorgespannten Wälzkörper 15 wird hier zumindest eine zentrierende Wirkung bezüglich der koaxialen Ausrichtung der Längsachsen der beiden Profile 1, 2 und der Gleithülse 7 bewirkt.

Anstelle einer in Längsrichtung der Gleithülse 7 unverschiebbaren Halterung der Wälzkörper 15 könnten diese auch in Längsrichtung begrenzt verschiebbar sein. Entsprechende langlochförmige Ausnehmungen 14 in der Gleithülse 7 gehen aus Fig. 10 hervor. Die Längsenden einer jeweiligen Ausnehmung 14 bilden Anschläge 30 zur Begrenzung der Längsverschiebung des in ihr angeordneten Wälzkörpers 15. Hier wirkt der jeweilige Wälzkörper 15 auf die Länge des Langlochs mit einer reinen Roll-Reibung gegenüber der Gleithülse 7.

In zumindest einigen oder allen Ausnehmungen 14 könnten auch mehr als ein Wälzkörper 15 angeordnet sein.

Die Ausnehmungen 14 könnten auch Mündungsbereich zur äußeren Oberfläche 17 Verengungen bzw. nach innen vorstehende Lippen aufweisen, um die Wälzkörper 15 gegen ein Herausfallen aus den Ausnehmungen 14 zu sichern.

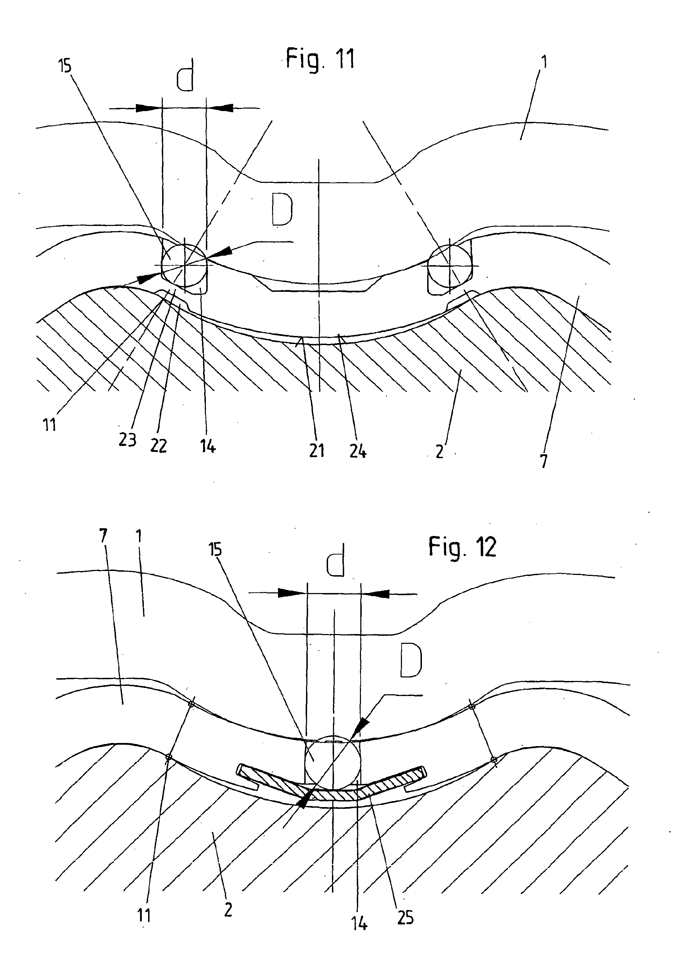

Eine weitere Ausführungsvariante ist in Fig. 11 dargestellt. Für eine elastische Bettung der Wälzkörper 15 sind hier im Bereich der Ausnehmungen 14 von der inneren Oberfläche 21 der Gleithülse 7 ausgehende Vertiefungen 22 angeordnet, wodurch eine Freistellung des Bodens 23 der Ausnehmung 14 gegenüber der äußeren Oberfläche 24 des inneren Profils 2 erreicht wird.

Im Mündungsbereich einer jeweiligen Ausnehmung 14 zur äußeren Oberfläche 17 verengt sich diese wiederum auf einen Durchmesser d, der kleiner ist als der Durchmesser D des in ihr drehbar angeordneten Wälzkörpers 15, um diesen gegen ein Herausfallen zu sichern.

Der Boden 23 könnte auch in Richtung zum äußeren Profil 1 gewölbt ausgebildet sein.

Weiters könnte der Boden 23 mit einem, z. B. um einen Teil des Umfangs des Bodens 23 verlaufenden, Spalt versehen sein, um einen Federarm für die elastische Bettung des Wälzkörpers 15 auszubilden. Der Spalt könnte beispielsweise über mehr als die Hälfte des äußeren Umfangs des Bodens 23 verlaufen. Anstelle eines Spalts, der also durch den Boden 23 durchgeht, könnte eine Verdünnung des Bodens 23 vorhanden sein.

Eine weitere Ausführungsvariante ist in Fig. 12 dargestellt. Die Ausnehmung 14 für einen jeweiligen Wälzkörper 15 durchsetzt hier das Kunststoffmaterial der Gleithülse 7. Der Boden der Ausnehmung 14 wird von einem elastischen Element 25 gebildet, welches im Material der Gleithülse 7 verankert ist. Auf diese Weise wird wiederum eine elastische Bettung für den jeweiligen Wälzkörper 15 erreicht. Die Ausnehmung 14 kann im Bereich ihrer Mündung zur äußeren Oberfläche 17 wiederum verengt ausgebildet sein (Durchmesser d), um den Wälzkörper 15 (Durchmesser D) gegen ein Herausfallen zu sichern.

Die Halterung eines elastischen Elements im oder am Material der Gleithülse 7 kann auch in einer anderen Weise als dargestellt erfolgen.

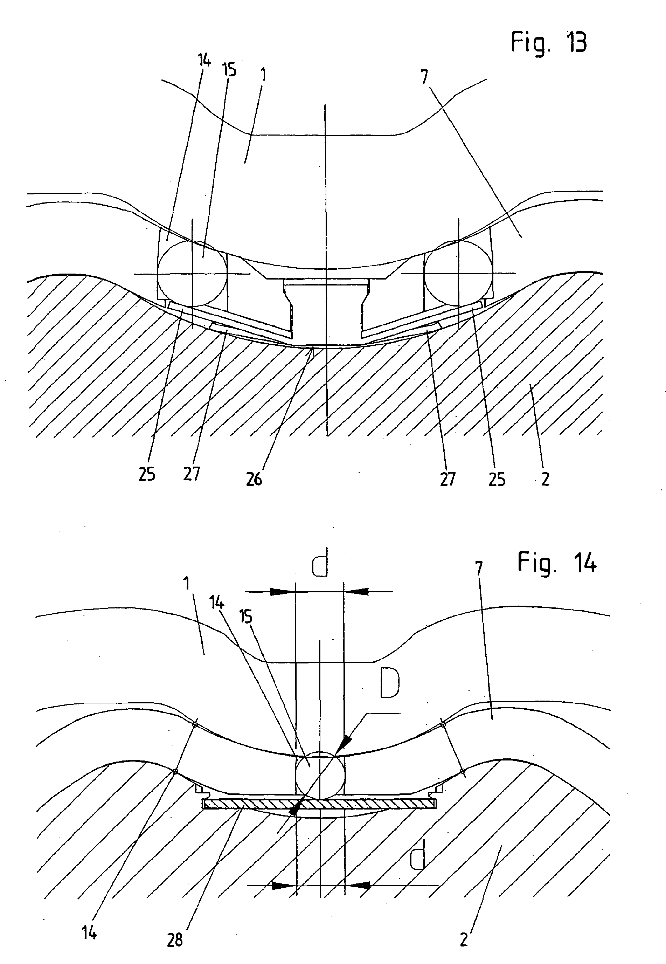

Beim Ausführungsbeispiel gemäß Fig. 13 wird der Boden einer jeweiligen Ausnehmung 14 wiederum von einem elastischen Element 25 gebildet. Dieses stellt hier einen Federarm eines federelastischen Einsatzteils 26 dar, das in die Gleithülse 7 eingeclipst dargestellt ist. In Längsrichtung vom jeweiligen elastischen Element 25 beabstandet ist jeweils mindestens ein weiterer Federarm 27 vorhanden, der sich am inneren Profil 2 abstützt.

Beim Ausführungsbeispiel gemäß Fig. 14 sind die Ausnehmungen 14 wiederum durch das Kunststoffmaterial der Gleithülse 7 durchgehend ausgebildet. Die Wälzkörper 15 stehen hier im unbelasteten Zustand beidseitig aus der Gleithülse 7 heraus. Auf der dem inneren Profil 2 zugewandten Seite liegen sie an elastischen Elementen 28 an, welche im Material des inneren Profils 2 befestigt sind. Auch andere Befestigungen von elastischen Elementen 28 im oder am Material des inneren Profils 2 sind denkbar und möglich. Weiters ist es auch denkbar und möglich, dass federelastische Elemente zwischen dem inneren Profil 2 und der Gleithülse 7 nur eingelegt sind, ohne am inneren Profil 2 oder an der Gleithülse 7 befestigt zu sein.

Die in den Ausführungsbeispielen gezeigten kugelförmigen Wälzkörper weisen vorzugsweise Durchmesser im Bereich zwischen 0,5 mm und 4 mm auf. Auch andere Wälzkörper, beispielsweise Rollen, die vorzugsweise in diesem Durchmesserbereich liegen, sind als Wälzkörper grundsätzlich einsetzbar.

Vorzugsweise liegt bei allen beschriebenen Ausführungsbeispielen der Überstand a der Wälzkörper gegenüber der Gleithülse 7 im unbelasteten Zustand (= freien Zustand der Gleithülse) im Bereich zwischen 0,02 mm und 0,3 mm, wobei ein Bereich zwischen 0,08 mm und 0,12 mm besonders bevorzugt ist.

Wenn die Wälzkörper 15 auf elastischen Elementen 25, 28 aufliegen, wie dies für einige Ausführungsbeispiele beispielhaft beschrieben ist, so bestehen diese elastischen Elemente 25, 28 bevorzugterweise aus einem elastischen Metall. Solche elastische Elemente 25, 28 können günstigerweise zur Reibungsminderung gegenüber den Wälzkörpern 15 mit einer Gleitbeschichtung versehen sein oder ein Gleitmaterial tragen, auf dem die Wälzkörper 15 aufliegen.

Wenn zwischen den Profilen 1, 2 kein Drehmoment wirkt, so erfolgt eine Längsverschiebung zwischen den Profilen 1, 2 in allen Ausführungsbeispielen über die von den an den Laufbahnen des äußeren Profils 1 anliegenden Wälzkörper 15, es wird also eine Wälzlagerung des äußeren Profils 1 gegenüber der Gleithülse 7 ausgebildet. Das Gleiche gilt bei einem einwirkenden Drehmoment, welches unterhalb eines Grenzwerts, z. B. 6 Nm liegt. Wenn das einwirkende Drehmoment den Grenzwert erreicht oder überschreitet, so erfolgt die Längsführung durch eine Gleitlagerung zwischen der Gleithülse 7 und dem äußeren Profil 1.

Die gegen das längsverschiebliche Profil vorgespannten Wälzkörper 15 wirken im Sinne einer Zentrierung, zumindest bezüglich der Längsachsen der Profile 1, 2 und der Gleithülse 7, vorzugsweise auch bezüglich der Drehstellung zwischen dem die Gleithülse 7 in Längsrichtung unverschieblich haltenden Profil 2 und dem längsverschieblichen Profil 1.

Denkbar und möglich ist es auch, die Gleithülse 7 in Längsrichtung unverschiebbar mit dem äußeren Profil 1 zu verbinden. Die Wälzkörper 15 würden dann mit der äußeren Oberfläche 24 des inneren Profils 2 zusammenwirken. Die verschiedenen zuvor beschriebenen Ausführungsvarianten wären in entsprechend angepasster Form auch in diesem Fall einsetzbar.

Zwischen dem äußeren Profil 1 und dem inneren Profil 2 könnten auch zwei oder mehr in Längsrichtung aneinander anschließende oder voneinander beabstandete Gleithülsen 7 angeordnet sein.

In den gezeigten Ausführungsbeispielen weist das innere Profil 2 im Querschnitt gesehen in Umfangsrichtung vier drehmomentübertragende Erhebungen auf, die mit entsprechenden Konturen des äußeren Profils zusammenwirken (über die Gleithülse 7 bzw. die Wälzkörper 15). Es könnten in Umfangsrichtung beispielsweise auch drei oder zwei oder mehr als vier Erhebungen vorgesehen sein. Unabhängig von der Anzahl der Erhebungen sind diese vorzugsweise in Umfangsrichtung um gleiche Winkel voneinander beabstandet, günstigerweise sind die Profile 1, 2 gegenüber einer jeweiligen Verdrehung um einen solchen Winkel symmetrisch.

Unterschiedliche Modifikationen der gezeigten Ausführungsbeispiele sind denkbar und möglich, beispielsweise hinsichtlich der Ausbildung der konvexen und konkaven Abschnitte 9, 10, 12, 13 der Profile 1, 2, wobei zumindest einige der konvexen Abschnitte 13 des äußeren Profils 1 den konkaven Abschnitten 9 des inneren Profils 2 und/oder der konkaven Abschnitte 12 des äußeren Profils 1 den konvexen Abschnitten 10 des inneren Profils 2 in einander zumindest teilweise überschneidenden Umfangsbereichen liegen.

### Legende

### zu den Hinweisziffern:

- 1: äußeres Profil
- 2: inneres Profil
- 3: Längsachse
- 4: Formstück
- 5: Formstück
- 6: Spaltraum
- 7: Gleithülse
- 8: Nut
- 9: konkaver Abschnitt
- 10: konvexer Abschnitt
- 11: Übergangspunkt
- 12: konkaver Abschnitt
- 13: konvexer Abschnitt
- 14: Ausnehmung
- 15: Wälzkörper
- 16: innere Oberfläche
- 17: äußere Oberfläche
- 18: Achse
- 19: Achse
- 20: Normale
- 21: innere Oberfläche
- 22: Vertiefung
- 23: Boden
- 24: äußere Oberfläche
- 25: elastisches Element
- 26: Einsatzteil
- 27: Federarm
- 28: elastisches Element
- 29: Scheitelpunkt
- 30: Anschlag

## Patentansprüche

1. Längenveränderbare Lenkspindel für Lenkvorrichtungen von Kraftfahrzeugen umfassend
- ein äußeres hülsenförmiges Profil (1) mit von der Kreisform abweichendem Querschnitt,
- ein inneres Profil mit von der Kreisform abweichendem Querschnitt, welches mit einem Endabschnitt in das äußere Profil (1) einschiebbar ist, wobei die innere Umfangskontur des äußeren Profils (1) und die äußere Umfangskontur des inneren Profils (2) wenigstens zum Teil von bogenförmigen Abschnitten gebildet werden und diese bogenförmigen Abschnitte zum zwischen dem äußeren Profil (1) und dem inneren Profil (2) liegenden Spaltraum (6) hin, vorzugsweise abwechselnd, konvexe und konkave Abschnitte (9, 10, 12, 13) sowohl des äußeren Profils (1) als auch des inneren Profils (2) bilden und die konvexen Abschnitte (13) des äußeren Profils (1) den konkaven Abschnitten (9) des inneren Profils (2) und/oder die konkaven Abschnitte (12) des äußeren Profils (1) den konvexen Abschnitten (10) des inneren Profils (2) zumindest teilweise gegenüberliegen, und
- eine im Spaltraum (6) angeordnete Gleithülse (7), die gegenüber einem der beiden Profile (1, 2) unverdrehbar und in Längsrichtung unverschiebbar gehalten ist und die zusammen mit dem die Gleithülse (7) haltenden Profil (2) gegenüber dem anderen Profil (1) in Längsrichtung verschiebbar, aber im Wesentlichen unverdrehbar ist,
**dadurch gekennzeichnet, dass** in Ausnehmungen (14) der Gleithülse (7) Wälzkörper (15) angeordnet sind, welche auf der Seite der Gleithülse (7), auf der sich im Montagezustand das gegenüber der Gleithülse (7) längsverschiebbare Profil befindet, zumindest in ihrem unbelasteten Zustand aus der Gleithülse (7) herausragen und welche im montierten Zustand der Lenkspindel jeweils gegen eine eine Lauffläche bildende Oberfläche (16) des gegenüber der Gleithülse (7) längsverschiebbaren Profils (1) vorgespannt sind und welche gegen eine Rückstellkraft in eine von der Lauffläche weggerichtete Richtung verschiebbar sind, wobei es bei einem Überschreiten eines Grenzwerts des zwischen den beiden Profilen (1, 2) wirkenden Drehmoments zu einem Kontakt zwischen der Oberfläche (17) der Gleithülse (7) und der Oberfläche (16) des ihr gegenüber längsverschiebbaren Profils (1) kommt.

2. Längenveränderbare Lenkspindel nach Anspruch 1, **dadurch gekennzeichnet, dass** die Wälzkörper (15) in Längsrichtung der Gleithülse (7) unverschiebbar sind oder zwischen von den Längsrändern der Ausnehmungen (14) gebildeten Anschlägen (30) begrenzt verschiebbar sind.

3. Längenveränderbare Lenkspindel nach Anspruch 1 oder 2, **dadurch gekennzeichnet, dass** die Wälzkörper (15) von demjenigen Profil (2), an dem die Gleithülse (7) in Längsrichtung unverschiebbar gehalten ist, beabstandet sind.

4. Längenveränderbare Lenkspindel nach einem der Ansprüche 1 bis 3, **dadurch gekennzeichnet, dass** die Ausnehmungen (14) in Form von Sacklöchern ausgebildet sind.

5. Längenveränderbare Lenkspindel nach einem der Ansprüche 1 bis 4, **dadurch gekennzeichnet, dass** die Rückstellkraft für die Wälzkörper (15) von einer einer Formänderung der Gleithülse entgegenwirkenden Kraft des Materials der Gleithülse (7) bewirkt wird.

6. Längenveränderbare Lenkspindel nach einem der Ansprüche 1 bis 3, **dadurch gekennzeichnet, dass** die Ausnehmungen (14) durch das Kunststoffmaterial der Gleithülse (7) durchgehen und die Wälzkörper (15) auf elastischen Elementen (25, 28) aufliegen, die die Rückstellkraft bewirken.

7. Längenveränderbare Lenkspindel nach Anspruch 6, **dadurch gekennzeichnet, dass** die elastischen Elemente (25) am oder im Kunststoffmaterial der Gleithülse (7) befestigt sind.

8. Längenveränderbare Lenkspindel nach Anspruch 6, **dadurch gekennzeichnet, dass** die elastischen Elemente (28) in das Profil (2), an dem die Gleithülse (7) in Längsrichtung unverschiebbar gehalten ist, eingelegt oder an oder in diesem befestigt sind.

9. Längenveränderbare Lenkspindel nach einem der Ansprüche 1 bis 8, **dadurch gekennzeichnet, dass** jeweils beidseitig eines Scheitelpunkts (29) eines vom Spaltraum (6) aus gesehen konvexen Abschnitts (13) der inneren Umfangskontur des äußeren Profils (1) mindestens ein Wälzkörper (15) angeordnet ist.

10. Längenveränderbare Lenkspindel nach Anspruch 9, **dadurch gekennzeichnet, dass** die Abstände der beidseitig eines jeweiligen Scheitelpunkts (29) angeordneten Wälzkörper (15) vom Scheitelpunkt (29) gleich sind.

11. Längenveränderbare Lenkspindel nach einem der Ansprüche 1 bis 8, **dadurch gekennzeichnet, dass** die Wälzkörper (15) an Scheitelpunkten (29) der vom Spaltraum (6) aus gesehen konvexen Abschnitte (13) der inneren Umfangskontur des äußeren Profils (1) angeordnet sind.

12. Längenveränderbare Lenkspindel nach einem der Ansprüche 1 bis 11, **dadurch gekennzeichnet, dass** jeweils mindestens zwei in Längsrichtung beabstandete Wälzkörper (15) an der gleichen Umfangsstelle der Gleithülse (7) angeordnet sind.

13. Längenveränderbare Lenkspindel nach einem der Ansprüche 1 bis 12, **dadurch gekennzeichnet, dass** die äußere Umfangskontur des inneren Profils (2) und die innere Umfangskontur des äußeren Profils (1) zumindest abschnittsweise und annähernd zueinander korrespondierend ausgebildet sind.

14. Längenveränderbare Lenkspindel nach einem der Ansprüche 1 bis 13, **dadurch gekennzeichnet, dass** in einer jeweiligen Ausnehmung (14) nur ein einzelner Wälzkörper (15) angeordnet ist.

15. Längenveränderbare Lenkspindel nach einem der Ansprüche 1 bis 13, **dadurch gekennzeichnet, dass** in einigen oder allen Ausnehmungen (14) mehr als ein Wälzkörper (15) angeordnet ist.

## Claims

1. A steering spindle of variable length for steering devices of motor vehicles, comprising
- an outer sleeve-shaped profile (1) with a cross-section deviating from the shape of a circle,
- an inner profile which has a cross-section deviating from the shape of a circle and which is capable of being pressed with an end portion into the outer profile (1), wherein the inner peripheral contour of the outer profile (1) and the outer peripheral contour of the inner profile (2) are formed at least in part from arcuate portions and the said arcuate portions form, preferably in an alternating manner, convex and concave portions (9, 10, 12, 13) both of the outer profile (1) and of the inner profile (2) towards the gap space (6) situated between the outer profile (1) and the inner profile (2), and the convex portions (13) of the outer profile (1) are situated at least in part opposite the concave portions (9) of the inner profile (2) and/or the concave portions (12) of the outer profile (1) are situated at least in part opposite the convex portions (10) of the inner profile (2), and
- a sliding sleeve (7) which is arranged in the gap space (6) and which is held so as to be non-rotatable with respect to one of the two profiles (1, 2) and so as to be non-displaceable in the longitudinal direction and which together with the profile (2) retaining the sliding sleeve (7) is displaceable in the longitudinal direction, but substantially non-rotatable, with respect to the other profile (1),
**characterized in that** rolling bodies (15) are arranged in recesses (14) in the sliding sleeve (7), which rolling bodies (15), on that side of the sliding sleeve (7) on which the profile which is longitudinally displaceable with respect to the sliding sleeve (7) is situated in the assembled state, project out of the sliding sleeve (7) at least in their non-loaded state, and which rolling bodies (15), in the assembled state of the steering spindle, are in each case pre-stressed against a surface (16) - forming a running surface - of the profile (1) which is longitudinally displaceable with respect to the sliding sleeve (7), and which rolling bodies (15) are displaceable in a direction away from the running surface opposed to a restoring force, wherein in the event that a threshold value of the torque acting between the two profiles (1, 2) is exceeded, contact occurs between the surface (17) of the sliding sleeve (7) and the surface (16) of the profile (1) which is longitudinally displaceable with respect to the said sliding sleeve (7).

2. A steering spindle of variable length according to Claim 1, **characterized in that** the rolling bodies (15) are non-displaceable in the longitudinal direction of the sliding sleeve (7) or are displaceable to a limited degree between stops (30) formed by the longitudinal edges of the recesses (14).

3. A steering spindle of variable length according to Claim 1 or 2, **characterized in that** the rolling bodies (15) are spaced from that profile (2) on which the sliding sleeve (7) is held so as to be non-displaceable in the longitudinal direction.

4. A steering spindle of variable length according to any one of Claims 1 to 3, **characterized in that** the recesses (14) are designed in the form of blind bores.

5. A steering spindle of variable length according to any one of Claims 1 to 4, **characterized in that** the restoring force for the rolling bodies (15) is produced by a force of the material of the sliding sleeve (7) which counteracts a change in the shape of the sliding sleeve.

6. A steering spindle of variable length according to any one of Claims 1 to 3, **characterized in that** the recesses (14) pass through the plastics material of the sliding sleeve (7), and the rolling bodies (15) rest on resilient elements (25, 28) which produce the restoring force.

7. A steering spindle of variable length according to Claim 6, **characterized in that** the resilient elements (25) are fastened on or in the plastics material of the sliding sleeve (7).

8. A steering spindle of variable length according to Claim 6, **characterized in that** the resilient elements (28) are inserted in the profile (2) on which the sliding sleeve (7) is held so as to be non-displaceable in the longitudinal direction, or they are fastened on or in the said profile (2).

9. A steering spindle of variable length according to any one of Claims 1 to 8, **characterized in that** at least one rolling body (15) is arranged in each case on both sides of an apex (29) of a convex portion (13) - as viewed from the gap space (6) - of the inner peripheral contour of the outer profile (1).

10. A steering spindle of variable length according to Claim 9, **characterized in that** the distances of the rolling bodies (15) arranged on both sides of a respective apex (29) from the apex (29) are equal.

11. A steering spindle of variable length according to any one of Claims 1 to 8, **characterized in that** the rolling bodies (15) are arranged at apices (29) of the convex portions (13) - as viewed from the gap space (6) - of the inner peripheral contour of the outer profile (1).

12. A steering spindle of variable length according to any one of Claims 1 to 11, **characterized in that** at least two rolling bodies (15) spaced in the longitudinal direction are arranged in each case at the same peripheral point of the sliding sleeve (7).

13. A steering spindle of variable length according to any one of Claims 1 to 12, **characterized in that** the outer peripheral contour of the inner profile (2) and the inner peripheral contour of the outer profile (1) are designed so as to correspond to each other at least locally and approximately.

14. A steering spindle of variable length according to any one of Claims 1 to 13, **characterized in that** only a single rolling body (15) is arranged in a respective recess (14).

15. A steering spindle of variable length according to any one of Claims 1 to 13, **characterized in that** more than one rolling body (15) is arranged in some or all the recesses (14).

## Revendications

1. Broche de direction de longueur variable pour des dispositifs de direction de véhicules automobiles, comprenant :
- un profil extérieur (1) en forme de manchon ayant une section différente d'une section circulaire,
- un profil intérieur de section différente d'une section circulaire, et engagé par un segment d'extrémité dans le profil extérieur (1), le contour intérieur du profil extérieur (1) et le contour extérieur du profil intérieur (2) étant formé au moins en partie par des segments courbes et pour l'intervalle (6), situé entre le profil extérieur (1) et le profil intérieur (2), ces segments courbes forment de préférence une alternance de segments convexes et concaves (9, 10, 12, 13) ainsi que le profil extérieur (1) et le profil intérieur (2), et les segments convexes (13) du profil extérieur (1) sont au moins en partie en regard des segments concaves (9) du profil intérieur (2) et/ou les segments concaves (12) du profil extérieur (1), sont au moins en partie en regard des segments convexes (10) du profil intérieur (2), et
- une douille coulissante (7) prévue dans l'intervalle (6), qui est tenue de manière bloquée en rotation et en coulissement longitudinal par rapport à l'un des deux profils (1, 2), et qui peut coulisser dans la direction longitudinale par rapport à l'autre profil (1) avec le profil (2) tenant la douille coulissante (7), mais en étant pratiquement bloquée en rotation,
**caractérisée en ce que**
les cavités (14) de la douille coulissante (7), comportent des organes de roulement (15) sur le côté de la douille coulissante (7) sur lequel, en position de montage, se trouve le profil bloqué en coulissement longitudinal par rapport à la douille coulissante (7) en venant en saillie par rapport à la douille coulissante (7) au moins dans leur état non-sollicité et qui, à l'état monté de la broche de direction, sont précontraints contre une surface extérieure (16) formant la surface de circulation du profil (1) coulissant longitudinalement par rapport à la douille coulissante (7) et qui sont coulissants contre une force de rappel dans une direction s'écartant de la surface de circulation,
et en cas de dépassement d'une valeur limite du couple agissant entre les deux profils (1, 2), le contact se fait entre la surface extérieure (17) de la douille coulissante (7) et la surface extérieure (16) du profil opposé (1), coulissant longitudinalement.

2. Broche de direction de longueur variable selon la revendication 1,
**caractérisée en ce que**
les organes de roulement (15) sont bloqués en translation dans la direction longitudinale de la douille coulissante (7) ou sont coulissants de manière limitée entre les butées (30) formées par les bords longitudinaux des cavités (14).

3. Broche de direction de longueur variable selon la revendication 1 ou 2,
**caractérisée en ce que**
les organes de roulement (15) sont écartés du profil (2) contre lequel la douille coulissante (7) est tenue de manière bloquée dans la direction longitudinale.

4. Broche de direction de longueur variable selon l'une des revendications 1 à 3,
**caractérisée en ce que**
les cavités (14) sont sous la forme de trous borgnes.

5. Broche de direction de longueur variable selon l'une des revendications 1 à 4,
**caractérisée en ce que**
la force de rappel des organes de roulement (15) est produite par une force de la matière de la douille coulissante (7) s'opposant à une variation de forme de la douille coulissante.

6. Broche de direction de longueur variable selon l'une des revendications 1 à 3,
**caractérisée en ce que**
les cavités (14) traversent la matière plastique du manchon de coulissement (7) et les organes de roulement (15), s'appuient sur des éléments élastiques (25, 28) produisant la force de rappel.

7. Broche de direction de longueur variable selon la revendication 6,
**caractérisée en ce que**
les éléments élastiques (25) sont fixés sur ou dans la matière plastique de la douille coulissante (7).

8. Broche de direction de longueur variable selon la revendication 6,
**caractérisée en ce que**
les éléments élastiques (28) sont logés dans le profil (2) dans lequel, la douille coulissante (7) est tenue de manière bloquée en translation dans la direction longitudinale, les éléments élastiques étant insérés dans ou sur le profil (2).

9. Broche de direction de longueur variable selon l'une des revendications 1 à 8,
**caractérisée en ce que**
des deux côtés respectifs du sommet (29) un segment convexe (13) vu à partir de l'intervalle (6), est associé au contour périphérique intérieur du profil extérieur (1) d'au moins un organe de roulement (15).

10. Broche de direction de longueur variable selon la revendication 9,
**caractérisée en ce que**
les écarts des deux organes de roulement (15) prévus de part et d'autre d'un sommet respectif (29), sont égaux par rapport au sommet (29).

11. Broche de direction de longueur variable selon l'une des revendications 1 à 8,
**caractérisée en ce que**
les organes de roulement (15) sont prévus sur les sommets (29) des segments convexes (13) du contour périphérique intérieur du profil extérieur (1), lorsqu'on regarde à partir de l'intervalle (6).

12. Broche de direction de longueur variable selon l'une des revendications 1 à 11,
**caractérisée en ce que**
au moins deux organes de roulement (15) respectifs écartés dans la direction longitudinale, sont prévus aux mêmes points périphériques de la douille coulissante (7).

13. Broche de direction de longueur variable selon l'une des revendications 1 à 12,
**caractérisée en ce que**
le contour périphérique extérieur du profil intérieur (2) et le contour périphérique intérieur du profil extérieur (1), sont réalisés au moins par segments et sensiblement de façon correspondante.

14. Broche de direction de longueur variable selon l'une des revendications 1 à 13,
**caractérisée en ce que**
l'une des cavités respectives (14) comporte un organe de roulement (15), isolé.

15. Broche de direction de longueur variable selon l'une des revendications 1 à 13,
**caractérisée en ce que**
certaines ou toutes les cavités (14) reçoivent plus d'un organe de roulement (15).
